# EUROPÄISCHE PATENTSCHRIFT

(11) **EP 0 735 078 B1**
(45) Veröffentlichungstag und Bekanntmachung des Hinweises auf die Patenterteilung: **01.07.1998**
(21) Anmeldenummer: 96104389.0
(22) Anmeldetag: 20.03.1996
(51) Int. Cl.: C08J 3/205, C08L 51/04, B29C 47/40, B29C 47/76

(54) **Verfahren zur Herstellung von Thermoplasten**
Process for producing thermoplastic resin
Procédé de préparation de thermoplastes

(30) Priorität: 27.03.1995 DE 19511142; 21.12.1995 DE 19547976
(43) Veröffentlichungstag der Anmeldung: 02.10.1996
(73) Patentinhaber: BASF Aktiengesellschaft, 67063 Ludwigshafen (DE)
(72) Erfinder: Güntherberg, Norbert, 67346 Speyer (DE); Hofmann, Jürgen, 67069 Ludwigshafen (DE); Ohlig, Hilmar, 67657 Kaiserslautern (DE); Mailahn, Elmar, 67547 Worms (DE); Bus, Klaus, 67655 Kaiserslautern (DE); Czauderna, Bernhard, Dr., 69493 Hirschberg (DE); Grabowski, Sven, Dr., 67061 Ludwigshafen (DE)

(56) Entgegenhaltungen:
- EP-A- 0 118 847
- EP-A- 0 233 371
- EP-A- 0 734 825
- EP-A- 0 734 826
- EP-A- 0 735 077
- JP-A- 4 008 754
- US-A- 4 802 769
- PATENT ABSTRACTS OF JAPAN vol. 007, no. 011 (C-145), 18.Januar 1983 & JP-A-57 167303 (TOSHIBA KIKAI KK), 15.Oktober 1982,
- PATENT ABSTRACTS OF JAPAN vol. 009, no. 160 (C-289), 4.Juli 1985 & JP-A-60 036502 (DENKI KAGAKU KOGYO KK), 25.Februar 1985,
- PATENT ABSTRACTS OF JAPAN vol. 017, no. 142 (C-1038), 23.März 1993 & JP-A-04 311704 (ASAHI CHEM IND CO LTD), 4.November 1992,
- PATENT ABSTRACTS OF JAPAN vol. 015, no. 053 (M-1079), 7.Februar 1991 & JP-A-02 286208 (TOSHIBA MACH CO LTD), 26.November 1990,
- PATENT ABSTRACTS OF JAPAN vol. 013, no. 500 (M-891), 10.November 1989 & JP-A-01 202406 (TOSHIBA MACH CO LTD;OTHERS: 01), 15.August 1989,
- PATENT ABSTRACTS OF JAPAN vol. 016, no. 411 (C-0979), 31.August 1992 & JP-A-04 139202 (MITSUBISHI RAYON CO LTD;OTHERS: 01), 13.Mai 1992,
- PATENT ABSTRACTS OF JAPAN vol. 013, no. 367 (C-626), 15.August 1989 & JP-A-01 123852 (MITSUBISHI RAYON CO LTD), 16.Mai 1989,
- PATENT ABSTRACTS OF JAPAN vol. 13, no. 367 (C-626), 15.August 1989 & JP-A-01 123853 (MITSUBISHI RAYON CO LTD), 16.Mai 1989,

## Beschreibung

Die vorliegende Erfindung betrifft ein neues Verfahren zur Herstellung von schlagzäh modifizierten Thermoplasten durch mechanische Entwässerung einer wasserfeuchten, bis zu 50 Gew.-% Restwasser enthaltenden Elastomerkomponente A und das Vermischen der entwässerten Elastomerkomponente A' mit einem thermoplastischen Polymeren B in einer Schneckenmaschine.

Außerdem betrifft die Erfindung spezielle Ausführungsformen des genannten Verfahrens, auch solche unter Verwendung bestimmter Komponenten A und B.

Die parallelen Europäischen Patentanmeldungen 735 077, 734 826 und 734 825 beschreiben ähnliche Verfahren, die sich jedoch hinsichtlich der Konfiguration bzw. der Betriebsweise der Schneckenmaschine vom Verfahren dieser Anmeldung unterscheiden.

Als Elastomerkomponenten für die Schlagzähmodifizierung von thermoplastischen oder anderen Kunststoffen werden häufig partikelförmige Kautschuke verwendet, die gepfropft oder ungepfropft sein können. Solche Kautschuke werden üblicherweise in wäßrigen Systemen hergestellt, beispielsweise durch Emulsionsoder Suspensionspolymerisation. Die bei der Suspensionspolymerisation entstandenen bzw. bei der Emulsionspolymerisation durch Zugabe eines koagulierenden Fällmittels ausgefällten Partikel werden in der Regel mit Wasser gewaschen und durch ein geeignetes Entwässerungsverfahren wie Sieben, Filtrieren, Dekantieren, Zentrifugieren oder eine teilweise thermische Trocknung, z.B. mittels eines Stromtrockners oder eines Sprühtrockners, entwässert. Man erhält in jedem Falle teilentwässerte Produkte.

Häufig verwendete Pfropfkautschuke sind beispielsweise mit einem Styrol-Acrylnitril-Copolymeren (SAN) gepfropftes Polybutadien und mit einem solchen Copolymeren gepfropftes Poly-n-butylacrylat, oder aus mehreren Pfropf stufen aufgebaute Kautschuke auf Basis von Butadien, Styrol, n-Butylacrylat, Methylmethacrylat und/oder Acrylnitril.

Der Restwassergehalt des nach der Teilentwässerung erhaltenen Kautschuks beträgt bis zu 50 Gew.-% und wird üblicherweise durch energieaufwendiges Trocknen entfernt. Der als Pulver anfallende, getrocknete Kautschuk wird schließlich in den als Pulver oder Granulat vorliegenden Thermoplasten unter Aufschmelzen eingearbeitet, wobei das Endprodukt entsteht. Das Kautschukpulver neigt während des Trocknens und der Einarbeitung in den Thermoplasten wegen des Feinstaubanteils zur Selbstentzündung.

Nach einem in DE-A-20 37 784 beschriebenen Vorschlag kann man teilentwässerten Pfropfkautschuk in eine SAN-Schmelze unter Verdampfen des Wassers eintragen und einen diesen Pfropfkautschuk enthaltenden Thermoplasten erhalten. Dieses Verfahren erfordert einen relativ hohen Aufwand an elektrischer Energie.

Die EP-A 534 235 lehrt ein Verfahren zur Herstellung von schlagzäh modifizierten Thermoplasten durch Einarbeitung von mechanisch teilweise entwässertem Kautschuk in einen Thermoplasten oberhalb des Erweichungspunktes des Thermoplasten, wobei die Einarbeitung in einem Hauptextruder geschieht und die Teilentwässerung des Kautschuks in einem seitlich am Hauptextruder angebrachten sog. Seitenextruder vorgenommen wird. Das im Kautschuk verbliebene Restwasser wird während der Einarbeitung durch vor und nach der Einmischstelle befindliche Entgasungsöffnungen als Dampf entfernt.

Nachteilig an diesem Verfahren ist die Notwendigkeit, zur Herstellung des schlagzähen Thermoplasten zwei Extruder betreiben zu müssen. Außerdem ist die Entwässerung des Kautschuks im Seitenextruder nicht vollständig, so daß eine große Menge Wasser im Hauptextruder verdampft werden muß.

Die US-Patentschrift 5 151 026 beschreibt einen Extruder, in dem zerkleinerte und gewaschene Kunststoffabfälle, deren Wasseranteil bis zu 50 Gew.-% beträgt, entwässert werden. Zu diesem Zweck befinden sich in der Extruderschnecke, die ansonsten wie üblich ein Rechtsgewinde aufweist, kurze Abschnitte mit einem Linksgewinde. Die aus dieser US-Schrift hervorgegangene Teilanmeldung US 5 232 649 beschreibt das entsprechende Verfahren.

Die japanische Schrift JP 22 86 208 lehrt einen Zweischneckenextruder für die Entwässerung thermoplastischer Formmassen, dessen Rechtsgewinde-Schnecken jeweils zwei Linksgewinde-Abschnitte aufweisen. Das Wasser tritt flüssig durch sog. Seihergehäusesiebartige Einsätze im Extrudergehäuse - und als Dampf durch Entgasungsöffnungen aus. Die Seihergehäuse neigen allerdings zu Verstopfungen durch austretendes Polymermaterial, wie es beispielsweise in der DE 15 79 106 für die Entwässerung von Synthesekautschuk beschrieben ist.

Die JP-A 1/202 406 beschreibt ebenfalls ein Verfahren, in dem feuchte kautschukartige Polymere auf einem Extruder in einem mit Seihergehäuse versehenen Bereich zunächst teilentwässert werden und dann das restliche Wasser in einer atmosphärischen und drei sich daran anschließenden Vakuum-Entgasungszonen entfernt wird. Dieses Verfahren beinhaltet neben den anfälligen Seihergehäusen noch einen aufwendigen Vakuum-Entgasungsbereich.

Die US-Patentschrift 4 802 769 beschreibt einen Extruder, in dem eine wässrige Suspension ("slurry") eines Kautschuk-Polymeren, sowie ein Styrol-Acrylnitril-Copolymer zu einem Thermoplasten verarbeitet werden. Dabei tritt das Wasser durch Seihergehäuse flüssig und durch eine dreistufige Entgasung als Dampf aus. Als Nachteile sind - neben den verstopfenden Seihergehäusen - zu nennen, daß der mit Seihergehäusen versehene Extruderteil beheizt ist, und daß im Entgasungsteil ein mehrfacher Druckaufbau durch Stauelemente erfolgt, wodurch das Polymermaterial thermisch und mechanisch stark beansprucht wird.

Die Patentschrift DE 30 26 842 lehrt einen Doppelschnecken-Extruder zur Entgasung von Thermoplasten, in dessen Entgasungs- und Ausstoßzone die Schneckenkerne einen geringen und das Doppelschneckengehäuse einen größeren Durchmesser haben als die vorangehenden Zonen. Dem Thermoplasten werden geringe Mengen Wasser zugegeben. In der aufgeweiteten, unter Vakuum betriebenen Entgasungszone entsteht unter Aufschäumen des Thermoplasten Wasserdampf, der die zu entfernenden Restmonomere mitreißt. Durch das Aufschäumen der Thermoplastschmelze ist der Vakuumbetrieb relativ störanfällig.

Die Schrift JP-A 4 008 754 lehrt die Herstellung eines Polymeren in einem Extruder, wobei ein Pfropfpolymer-Latex im Extruder über Seihergehäuse und Entgasungsvorrichtungen entwässert, und mit der Schmelze eines Vinylpolymeren vermischt wird.

Der Erfindung lag die Aufgabe zugrunde, ein Verfahren bereitzustellen, welches die geschilderten Nachteile nicht aufweist. Insbesondere sollte ein Verfahren geschaffen werden, das die Herstellung eines schlagzähen Thermoplasten aus einer wasserfeuchten Elastomerkomponente und einem thermoplastischen, spröden Polymeren auf technisch einfache Weise, möglichst in einem Verfahrensschritt, ermöglicht.

Demgemäß wurde das eingangs definierte Verfahren gefunden, wobei man die Elastomerkomponente A einem Zweischneckenextruder mit gleichsinnig rotierenden Schnecken zuführt, der in Förderrichtung im wesentlichen aus
- einem unbeheizten Dosierabschnitt, in den mittels einer Dosiereinrichtung Elastomerkomponente A dem Extruder zugeführt wird,
- mindestens einem der Entwässerung dienenden unbeheizten Abquetschabschnitt, der mindestens ein Stauelement, sowie jeweils mindestens eine zugehörige Entwässerungsöffnung, enthält, wobei als Entwässerungsöffnungen keine Seihergehäuse verwendet werden, wobei die Entwässerungsöffnungen mit jeweils einer Rückhalteschnecke versehen sind,
- mindestens einem Abschnitt, in dem das thermoplastische Polymere B als Schmelze in den Extruder eingeführt wird,
- mindestens einem mit Durchmischungs-, Knet- und/oder anderen Plastifizierungselementen versehenen Abschnitt,
- mindestens einem mit mindestens einer Entgasungsöffnung versehenen Entgasungsabschnitt, in dem das restliche Wasser als Dampf entfernt wird, und
- einer Austragszone
aufgebaut ist, wobei das aus den Entwässerungsöffnungen austretende Wasser teilweise oder vollständig in flüssiger Phase vorliegt, und wobei beide Extruderschnecken aus jeweils zwei Abschnitten bestehen, wobei der vordere Abschnitt einen kleineren Durchmesser aufweist und dreigängig ist, und der hintere Abschnitt einen größeren Durchmesser aufweist und zweigängig ist, wobei die Änderung der Schneckengeometrien zwischen dem Anfang des ersten Plastifizierungsabschnitts, welcher hinter der Zufuhröffnung des thermoplastischen Polymeren B liegt, und dem Anfang des ersten Entgasungsabschnitts, erfolgt.

Außerdem wurden besondere Ausführungsformen des Verfahrens hinsichtlich der Ausgestaltung des Extruders und der verwendeten Komponenten A und B gefunden.

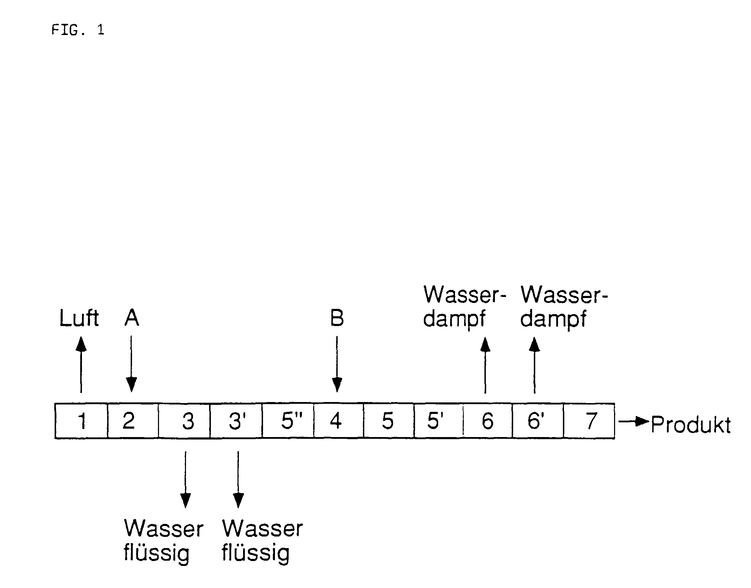

Nachfolgend seien das Verfahrensprinzip und die bevorzugten Ausführungsformen des Verfahrens beschrieben, wobei die als Abschnitte bzw. Zonen bezeichneten Bestandteile des Extruders nicht notwendigerweise identisch sind mit den einzelnen Bauteilen wie Gehäuseteilen, Schneckensegmenten, aus denen der Extruder montiert ist. Ein Abschnitt bzw. eine Zone besteht in der Regel aus mehreren Bauteilen. Die bei den Abschnitten bzw. Zonen genannten Ziffern beziehen sich auf Fig. 1.

Die wasserfeuchte, bis zu 50 Gew.-% Restwasser enthaltende Elastomerkomponente A, beispielsweise ein durch Ausfällen eines durch Emulsionspolymerisation gewonnener und auf bis zu 50 Gew.-% Restwassergehalt, teilentwässerter Pfropfkautschuk - wobei die Teilentwässerung z.B. durch Filtrieren, Dekantieren, Zentrifugieren und/oder thermische Trocknung erfolgen kann -, wird dem Dosierabschnitt 2 des Extruders zugeführt, wobei der Dosierabschnitt üblicherweise aus einer automatisch arbeitenden Dosiereinrichtung und der eigentlichen Dosieröffnung besteht. Die Dosiereinrichtung ist beispielsweise als Förderschnecke ausgebildet, die das Fördergut in die Dosieröffnung fördert oder drückt. Ebenso ist denkbar, daß die Komponente A durch geeignete gravimetrische oder volumetrische Dosiereinrichtungen dosiert und im freien Fall in die Einzugsöffnung des Extruders dosiert wird. Mittels einer geeigneten Schneckengeometrie im Dosierabschnitt wird erreicht, daß die Komponente A eingezogen und entlüftet wird. Wahlweise kann eingeschlossene Luft auch durch einen Entlüftungsabschnitt 1 entweichen, der sich stromaufwärts entgegen der Förderrichtung des Extruders befindet und typischerweise eine oder mehrere Entlüftungsöffnungen aufweist.

Die wasserfeuchte Elastomerkomponente wird stromabwärts in den ersten Abquetschabschnitt gefördert.

Im ersten Abquetschabschnitt 3 wird ein erheblicher Teil des in der Elastomerkomponente enthaltenen Restwassers mechanisch entfernt. Das Material wird gegen ein als Hindernis wirkendes Stauelement gefördert, welches sich in der Regel am Ende des Abquetschabschnitts befindet. Hierdurch wird ein Druck aufgebaut, der das Wasser aus der Elastomerkomponente auspreßt. Man kann den Druck je nach dem rheologischen Verhalten des Kautschuks durch unterschiedliche Anordnung von Schnecken-, Knetelementen oder anderen Stauelementen aufbauen. Grundsätzlich sind alle handelsüblichen, dem Druckaufbau dienenden Vorrichtungselemente denkbar.

Beispielsweise seien als mögliche Stauelemente
- überschobene, fördernde Schneckenelemente
- Schneckenelemente mit Steigung entgegen der Förderrichtung
- Knetblöcke mit nichtfördernden Knetscheiben in unterschiedlicher Breite
- Knetblöcke mit rückfördernder Steigung
- Knetblöcke mit fördernder Steigung
- Zylinderscheiben, Exzenterscheiben und daraus konfigurierte Blöcke
- neutrale Stauscheiben ("Drosselscheiben")
- mechanisch verstellbare Drosseln (Schiebegehäuse, Radialdrosseln, Zentraldrosseln)
genannt.

Es können auch zwei oder mehrere der Stauelemente miteinander kombiniert werden. Gleichfalls kann die Stauwirkung durch die Länge und die Intensität der einzelnen Stauelemente dem jeweiligen Elastomeren angepaßt werden.

Im ersten Abquetschabschnitt sind bevorzugt sämtliche konstruktiven Merkmale und alle Betriebsparameter des Extruders derart aufeinander abgestimmt, daß bei der gewählten Schneckendrehzahl das Elastomermaterial zwar gefördert und komprimiert, jedoch nicht oder lediglich in untergeordnetem Maße plastifiziert oder angeschmolzen und nicht aufgeschmolzen wird.

Bevorzugt enthält der Abquetschabschnitt 3 des Extruders zum Druckaufbau Schneckenelemente mit einer Steigung entgegen der Förderrichtung und/oder entsprechende Knetblöcke.

Das im Abquetschabschnitt aus dem Elastomermaterial ausgepreßte Wasser verläßt den Extruder in flüssiger Phase und nicht als Dampf. In einer weniger bevorzugten Ausführungsform treten bis zu 20 Gew.-% des in diesem Abschnitt entfernten Wassers als Dampf aus.

Der Abquetschabschnitt ist mit einer oder mehreren, im Regelfall unter Normaldruck stehenden Entwässerungsöffnungen versehen. Sie befinden sich bevorzugt etwa in der Mitte des Abquetschabschnittes und in der Regel an der Oberseite des Extruders. Weiterhin sind die Entwässerungsöffnungen mit einer Vorrichtung versehen, die das Austreten des geförderten, ggf. unter Druck stehenden Elastomeren A verhindern. Dazu werden sog. Rückhalteschnecken verwendet.

Die Temperatur des austretenden Wassers beträgt im allgemeinen 20 bis 50°C und bevorzugt 25 bis 40°C, gemessen an der Austrittsöffnung.

Im ersten Abquetschabschnitt werden, abhängig von der Elastomerkomponente und dem anfangs vorhandenen Restwassergehalt, üblicherweise 10 bis 90, bevorzugt 25 bis 80 Gew.-% des anfänglich enthaltenen Restwassers entfernt.

Ist die Elastomerkomponente ein partikelförmiger Propfkautschuk, so liegt er nach Passieren der ersten Stauzone in der Regel ganz überwiegend pulverförmig vor.

Die partiell entwässerte Elastomerkomponente A wird über die Stauzonen hinweggefördert und gelangt in den nächsten Extruderabschnitt.

In einer bevorzugten Ausführungsform folgt auf den soeben beschriebenen ersten Abquetschabschnitt 3 ein zweiter Abquetschabschnitt 3', der wiederum aus einem fördernden Abschnitt und einer als Hindernis wirksamen Stauzone besteht. Hinsichtlich dieses Abschnittes gelten im wesentlichen die gleichen Ausführungen wie zum ersten Abquetschabschnitt 3.

Im zweiten Abquetschabschnitt wird die Elastomerkomponente weiter entwässert, wobei nochmals bis zu 50, bevorzugt 5 bis 35 Gew.-% des anfänglich (vor der Extrusion) enthaltenen Wassers entfernt werden. Durch die von der rotierenden Extruderschnecke eingebrachte mechanische Energie steigt die Temperatur der Elastomerkomponente im zweiten Abquetschabschnitt im allgemeinen auf Werte bis 250°C an.

Das in diesem Abschnitt entfernte Wasser tritt zu 20 bis 99 Gew.-% als Flüssigkeit aus, die an 100 Gew.-% fehlende Menge als Dampf. Bevorzugt werden die Entwässerungsöffnungen jedoch so ausgestaltet, daß der Anteil des flüssig austretenden Wassers trotz der höheren Materialtemperatur 70 Gew.-% oder mehr beträgt. Hierzu werden die Geometrien der Extruderschnecken und der Rückhalteschnecken derart gestaltet, wie es dem Fachmann aus dem Stand der Technik bekannt ist.

In der Regel liegt die Wassertemperatur an der Austrittsöffnung bei 40 bis 130, bevorzugt bei 50 bis 95°C.

Der Extruder kann hinter dem zweiten Abquetschabschnitt 3' weitere Abquetschabschnitte enthalten, insbesondere dann, wenn der anfängliche Restwassergehalt der Elastomerkomponente A hoch ist, oder wenn die gewünschten Produkteigenschaften dies erfordern.

Nach Passieren des letzten Abquetschabschnittes ist die Elastomerkomponente vom Großteil des Restwassers befreit (Komponente A') und gelangt in einen Abschnitt 4, in dem sich eine oder mehrere Zufuhröffnungen für das thermoplastische Polymere B befinden. Vorteilhaft ist, daß das Polymere B in Form seiner Schmelze zugeführt wird. Enthält der Abschnitt mehrere Zufuhröffnungen, so können diese z.B. hintereinander entlang einer gedachten Achse in Längsrichtung des Extruders, kreisförmig entlang des Extruderumfanges oder entlang einer imaginären Helix um den Extruder herum angeordnet sein.

Die Zufuhr der Schmelze des Polymeren B kann mittels eines Extruders, bevorzugt jedoch mittels technisch einfacher Fördereinrichtungen wie Schmelzepumpen oder Dosierschnecken erfolgen.

Im Bereich des Abschnittes 4, in dem die Schmelze des thermoplastischen Polymeren B zugeführt wird, ist die Schnecke zweckmäßigerweise als Förderschnecke ausgebildet, welche die Mischung aus Elastomerkomponente A und der Schmelze des Thermoplasten B nur in geringem Ausmaß zu homogenisieren vermag.

An den die Thermoplastschmelze B zuführenden Abschnitt schließt sich ein Abschnitt 5 an, der mit Durchmischungs-, Knet- und/oder anderen Plastifizierungselementen versehen ist ("Plastifizierungsabschnitt").

Die Plastifizierungselemente homogenisieren die Polymerenmischung unter gleichzeitigem Aufschmelzen der entwässerten Elastomerkomponente A'.

Als Plastifizierungselemente kommen die dem Fachmann geläufigen Bauteile in Betracht, beispielsweise Schneckenelemente mit geringer Steigung in Förderrichtung, Knetblöcke mit schmalen oder breiten, fördernden oder nichtfördernden Knetscheiben, Schneckenelemente mit einer Steigung entgegen der Förderrichtung, oder eine Kombination solcher Elemente. Hier können alle handelsüblichen, der Plastifizierung dienenden Bauteile eingesetzt werden. Die Auswahl der Plastifizierungselemente im Plastifizierungsabschnitt hinsichtlich ihrer Art, Anzahl und Dimensionierung richtet sich nach den Komponenten der Polymermischung, insbesondere nach der Viskosität und Erweichungstemperatur sowie der Mischbarkeit der Komponenten.

Der Extruder kann nach dem beschriebenen Plastifizierungsabschnitt einen oder mehrere weitere Plastifizierungsabschnitte 5' enthalten, wenn die Homogenisierung und das Aufschmelzen der Mischung im ersten Plastifizierungsabschnitt nicht vollständig war.

Für den bzw. die weiteren Plastifizierungsabschnitte gelten die Ausführungen zum ersten Plastifizierungsabschnitt entsprechend.

In einer bevorzugten Ausführungsform wird die Schmelze der thermoplastischen Polymeren B dem Extruder am Anfang des Plastifizierungsabschnittes zugeführt. Bei dieser Ausführungsform fällt demnach der Abschnitt der Thermoplastzufuhr 4 mit dem Anfang des Plastifizierungsabschnittes 5 zusammen.

In einer weiteren besonderen Ausführungsform des Extruders befindet sich ein oder mehrere weitere Plastifizierungsabschnitte vor dem Abschnitt 4, in dem die Schmelze des thermoplastischen Polymeren zugeführt wird, also hinter dem letzten Abquetschabschnitt. In diesem Plastifizierungsabschnitt 5" wird die weitestgehend entwässerte Elastomerkomponente A', beispielsweise das Kautschukpulver, zunächst allein homogenisiert und plastifiziert.

Die Schmelze des thermoplastischen Polymeren B wird demnach bei dieser Ausführungsform in eine viskose "Schmelze" der Elastomerkomponente A' eingebracht. In diesem Fall dient der der Zumischung von Schmelze B (Abschnitt 4) nachfolgende Plastifizierungsabschnitt 5 lediglich der Homogenisierung des Gemisches der beiden bereits im plastischen Zustand vorliegenden Komponenten und enthält daher in der Regel weniger Durchmischungselemente als die bisher beschriebenen Plastifizierungsabschnitte.

Welche der beschriebenen Varianten der Zufuhr von Schmelze B, nämlich
- in einen fördernden Abschnitt vor dem Plastifizierungsabschnitt,
- am Anfang des Plastifizierungsabschnittes,
- in einen fördernden Abschnitt zwischen zwei Plastifizierungsabschnitten,
gewählt wird, hängt von der physikalischen und chemischen Eigenschaften der zu vermischenden Komponenten ab. Nur beispielhaft seien die Viskositäten der Schmelzen von Elastomerkomponente A' und thermoplastischem Polymeren B, die Erweichungstemperaturen der Komponenten, ihre thermische Belastbarkeit bzw. Zersetzungsneigung bei höheren Temperaturen, die Verträglichkeit im Sinne einer Mischbarkeit bzw. Benetzbarkeit der Komponenten, der Restwassergehalt der Polymermischung aus Elastomerkomponente A' und thermoplastischem Polymeren B, und, im Falle eines partikelförmigen Kautschuks als Elastomerkomponente A, dessen Teilchengröße und Teilchengrößenverteilung genannt.

Dem letzten Plastifizierungsabschnitt folgen ein oder mehrere Entgasungsabschnitte 6 bzw. 6', die jeweils mit einer oder mehreren Entgasungsöffnungen versehen sind. In den Entgasungsabschnitten wird das verbliebene Restwasser, welches in den Abquetschabschnitten noch nicht mechanisch entfernt wurde, teilweise oder vollständig entfernt. Wegen der üblicherweise über 100°C liegenden Temperaturen der Polymerschmelze tritt das Wasser zumeist vollständig als Dampf aus. Die zur Verdampfung des Wassers notwendige Energie wurde bereits in den Plastifizierungsabschnitten eingebracht.

Die Entgasungsöffnungen befinden sich bevorzugt an der Oberseite oder oben an der Seite des Extruders. Jedoch sind auch andere Anordnungen möglich, siehe hierzu die Ausführungen zur Position der Zufuhröffnungen für die Schmelze des thermoplastischen Polymeren B, die sinngemäß auch für die Entgasungsöffnungen gelten.

Die Entgasungsöffnungen können unter Normaldruck, unter Vakuum oder unter Überdruck betrieben werden, wobei alle Entgasungsöffnungen gleichen oder unterschiedlichen Druck aufweisen können. Im Falle eines Vakuums beträgt der Absolutdruck üblicherweise 100 bis 500 mbar; bei einer Entgasung unter Überdruck wird in der Regel bis zu 20 bar Absolutdruck eingestellt. Bevorzugt ist es jedoch, die Entgasungsabschnitte unter Normaldruck zu betreiben.

Die Anzahl der Entgasungsabschnitte sowie die Zahl, Anordnung und Dimensionierung der Entgasungsöffnungen richtet sich nach dem Wassergehalt des in die Entgasungsabschnitte eintretenden Polymeren und dem gewünschten Wasseranteil im Endprodukt. In einer bevorzugten Ausführungsform wird ein Extruder mit ein bis zwei Entgasungsöffnungen verwendet.

Die Entgasungsöffnungen der Entgasungsabschnitte können mit Vorrichtungen, z.B. Rückhalteschnecken, versehen sein, die ein Austreten des geförderten Materials durch die Öffnungen aus dem Extruder verhindern. In einer bevorzugten Ausführungsform sind solche Vorrichtungen jedoch nicht erforderlich.

Nachdem eine erhebliche Menge des in der Elastomerkomponente A enthaltenen Restwassers bereits in den Abquetschabschnitten 3 und 3' entfernt wurde, werden in allen Entgasungsabschnitten 6 und 6' zusammengenommen nur etwa 10 bis 60, bevorzugt 20 bis 40 Gew.-% des vor der Extrusion in der Elastomerkomponente A enthaltenen Restwassers entfernt.

Im Bereich der Entgasungsabschnitte sind die Extruderschnecken in der Regel als übliche Förderschnecken ausgebildet. Übliche Förderschnecken im Sinne dieser Anmeldung sind Elemente mit "Erdmenger"-Profil (vollständig selbstreinigend), Schubkantenelemente, Elemente mit Trapezprofil und Elemente mit Rechteckprofil, wobei die Schnecken auch abweichend von der Gangzahl des Abquetschteils mit geringerer oder höherer Gangzahl ausgestattet sein können. Hier können auch zwei- und eingängige Schneckenelemente zur Anwendung kommen.

Der letzte Abschnitt des Extruders ist die Austragzone 7. Sie besteht aus einer Förderschnecke und einem geschlossenen Gehäuseteil, das mit einer definierten Austragsöffnung abgeschlossen ist. Bevorzugt wird als Austragsöffnung ein Düsenkopf verwendet, der beispielsweise als Düsenplatte oder Düsenleiste ausgebildet ist, wobei die Düsen kreisförmig (Lochdüsenplatte), schlitzförmig oder in anderer Weise gestaltet sein können. Das im Falle einer Düsenplatte als Strang ausgetragene Produkt wird wie üblich, z.B. in Wasser abgekühlt und granuliert. Speziell bei Verwendung einer Schlitzdüse ist Würfelgranulierung möglich.

In einer besonderen Ausführungsform wird statt der oben beschriebenen Düsenleiste mit der sonst üblichen Kombination aus Strangabzug, Wasserbad und Granulator ein besonderer Düsenkopf mit anschließender Unterwassergranulierung eingesetzt. Hierbei tritt die Polymerschmelze durch eine Düsenplatte mit bevorzugt kreisförmig angeordneten runden Bohrungen, wird von rotierenden Messern abgetrennt und in Wasser abgekühlt, wobei das Polymer zu mehr oder weniger runden, perlförmigen Körnern erstarrt. Bei der Anordnung der Bohrungen sind jedoch auch andere als kreisförmige Anordnungen und andere als runde Lochformen gebräuchlich.

In einer weiteren Ausführungsform wird statt des Austrags über Düsenleiste, Wasserbadkühlung und Granulierung ein Heißabschlagsverfahren eingesetzt, wobei die aus dem Düsenkopf austretende Polymerschmelze nicht durch Flüssigkeit gekühlt, sondern nach Austritt aus dem Düsenkopf nach kurzer Luftkühlung noch im heißen Zustand zerkleinert (granuliert) wird. Das enstehende Granulat wird danach weiter gekühlt oder kühlt bei der Weiterverarbeitung ab, sofern dies notwendig ist. Es ist auch die Weiterverarbeitung im heißen Zustand denkbar.

Der Wassergehalt des ausgetragenen Polymeren (die "Strangfeuchte") beträgt in der Regel 0,1 bis 1,2 Gew.-%, bezogen auf dieses Polymere. Die Temperatur der aus der Austragsöffnung austretenden Polymerschmelze beträgt in der Regel 180 bis 350°C, je nach Art der eingesetzten Polymeren.

Wie allgemein bekannt ist, können die verschiedenen Zonen eines Extruders individuell geheizt oder gekühlt werden, um entlang der Schneckenachse ein optimales Temperaturprofil einzustellen. Weiterhin ist dem Fachmann geläufig, daß üblicherweise die einzelnen Abschnitte des Extruders verschieden lang sein können.

Die im Einzelfall zu wählenden Temperaturen und Längen der einzelnen Abschnitte unterscheiden sich in Abhängigkeit der beispielhaft bereits erwähnten chemischen und physikalischen Eigenschaften der Komponenten und deren Mengenverhältnissen.

Gleiches gilt auch für die Schneckendrehzahl, die innerhalb eines weiten Bereiches variieren kann. Nur beispielhaft sei eine Drehzahl der Extruderschnecken im Bereich von 100 bis 350 min⁻¹ genannt.

Es ist vorteilhaft, den Extruder derart auszugestalten und zu betreiben, daß sich bei einer Schneckendrehzahl von 100 bis 350 min⁻¹ mittlere Schergeschwindigkeiten von 180 bis 220 s⁻¹ einstellen. Jedoch kann es je nach Art, Menge und Eigenschaften der verwendeten Komponenten zweckmäßig sein, bei mittleren Schergeschwindigkeiten außerhalb dieses Bereiches zu arbeiten.

Die Schnecken des Extruders bestehen aus zwei Abschnitten unterschiedlichen Durchmessers, wobei der zweite (stromabwärts) befindliche Abschnitt den größeren Durchmesser hat. Die Änderung des Schneckendurchmessers kann sprunghaft, d.h. innerhalb eines sehr kurzen Bereiches der Schnecke, oder allmählich sein. Sie erfolgt in einem Bereich nach dem Ende des Abschnittes 4, in dem die Schmelze des thermoplastischen Polymeren B zugeführt wird, und vor dem Beginn des ersten Entgasungsabschnittes 6. Bevorzugt erfolgt die Durchmesseraufweitung sprunghaft, und bevorzugt befindet sich die Aufweitung direkt vor dem Beginn des ersten Entgasungsabschnittes.

In der Regel beträgt der Durchmesser des zweiten Schneckenabschnittes das 1,02 bis 1,20 und bevorzugt das 1,04 bis 1,15-fache des Durchmessers des ersten Schneckenabschnittes. Mit dem Schneckendurchmesser ändern sich die Gehäusedurchmesser entsprechend.

Mit der Änderung des Schneckendurchmessers geht eine Änderung der Gangzahl der Schnecke einher. Der vordere Schneckenabschnitt kleineren Durchmessers ist dreigängig, der hintere Abschnitt größeren Durchmessers dagegen zweigängig. Prinzipiell sind jedoch auch eingängige Schneckenabschnitte denkbar.

Als Elastomerkomponente A kann jedes Polymere eingesetzt werden, das elastomere Eigenschaften hat und einem Extruder zugeführt werden kann. Insbesondere werden, wie eingangs erwähnt, partikelförmige Kautschuke verwendet. Besonders bevorzugt sind solche Kautschuke, die eine aufgepfropfte Hülle aus anderen, in der Regel nicht elastomeren Polymeren aufweisen. Die dem Extruder als teilentwässertes Material zugeführten Pfropfkautschuk-Typen enthalten in einer bevorzugten Ausführungsform der Erfindung bis zu 50, besonders bevorzugt 25 bis 40 Gew.-% Restwasser.

Eine Ausführungsform der Erfindung besteht in einem Verfahren, bei dem als Elastomerkomponente A zwei- oder mehrstufig aufgebaute Pfropfkautschuke verwendet werden, bei denen die elastomeren Grund- oder Pfropfstufen durch Polymerisation eines oder mehrerer der Monomeren Butadien, Isopren, Styrol, Alkylstyrol, C₁- bis C₁₀-Alkylester der Acrylsäure oder der Methacrylsäure sowie geringen Mengen anderer, auch vernetzender Monomeren erhalten werden, und bei denen die harten Pfropfstufen aus einem oder mehreren der Monomeren Styrol, Alkylstyrol, Acrylnitril, Methylmethacrylat polymerisiert werden. Bevorzugt sind Pfropfpartikel A aus Polymeren auf Basis von Butadien/Styrol/Acrylnitril, n-Butylacrylat/Styrol/Acrylnitril, Butadien/n-Butylacrylat/Styrol/Acrylnitril, n-Butylacrylat/Styrol/Methylmethacrylat, Butadien/Styrol/ Acrylnitril/Methylmethacrylat und Butadien/n-Butylacrylat/Methylmethacrylat/Styrol/Acrylnitril. In Kern und/oder Schale können bis zu 10 Gew.-% funktioneller, polarer Monomerer einpolymerisiert sein.

In dieser Ausführungsform werden als thermoplastische Polymere B Styrol-Acrylnitril -(SAN)-Copolymere, α-Methylstyrol/Acrylnitril-Copolymere, Polystyrol, Polymethylmethacrylat, Polyvinylchlorid oder Mischungen dieser Polymere eingesetzt.

Dabei sind SAN-Polymere, Polymethylmethacrylat (PMMA) oder Mischungen dieser Polymere bevorzugt.

Ebenso kann man als Komponente B Copolymere auf Basis von Styrol/ Maleinsäureanhydrid, Styrol/imidiertem Maleinsäureanhydrid, Styrol/Maleinsäureanhydrid/imidiertem Maleinsäureanhydrid, Styrol/Methylmethacrylat, Styrol/Methylmethacrylat/Maleinsäureanhydrid, Methylmethacrylat/imidiertem Maleinsäureanhydrid, Styrol/imidiertem Methylmethacrylat, imidiertem PMMA oder Mischungen dieser Polymere verwenden.

Bei allen genannten thermoplastischen Polymeren B kann das Styrol ganz oder teilweise durch α-Methylstyrol oder kernalkylierte Styrole ersetzt sein.

Von den zuletzt genannten Styrol-Copolymeren B sind solche auf Basis von a-Methylstyrol/Acrylnitril, Styrol/Maleinsäureanhydrid, Styrol/Methylmethacrylat und Copolymere mit imidiertem Maleinsäureanhydrid bevorzugt.

Bekannte Beispiele für die Elastomerkomponente A sind Polymerisate von konjugierten Dienen wie Butadien und dessen Derivate, mit einer äußeren Pfropfhülle auf Basis einer vinylaromatischen Verbindung, z.B. SAN-Copolymeren. Gleichfalls bekannt sind Pfropfkautschuke auf Basis von vernetzten Polymerisaten aus C₁-bis C₁₀-Alkylestern der Acrylsäure wie n-Butylacrylat, Ethylhexylacrylat, gepfropft mit Polymeren auf der Grundlage vinylaromatischer Verbindungen sowie SAN-Copolymeren. Gebräuchlich sind auch Pfropfkautschuke, die im wesentlichen ein Copolymerisat aus konjugierten Dienen und C₁- bis C₁₀-Alkylacrylaten, beispielsweise ein Butadien-n-Butylacrylat-Copolymerisat, und eine äußere Pfropfstufe aus SAN-Copolymer enthalten.

Die Herstellung solcher Pfropfkautschuke nach den üblichen Verfahren, insbesondere durch Emulsions- oder Suspensionspolymerisation, ist bekannt.

Pfropfkautschuke auf Basis von SAN-gepfropftem Polybutadien sind beispielsweise in den Schriften DT 24 27 960 und EP-A 258 741 beschrieben, solche auf Basis von SAN-gepfropftem Poly-n-Butylacrylat in DE-AS 12 60 135 und DE-OS 31 49 358. Näheres zu SANgepfropften Poly(Butadien/n-Butylacrylat)-Mischkautschuken ist der EP-A 62 901 zu entnehmen.

Als thermoplastische Polymere B werden im Falle der im letzten Absatz genannten Pfropfkautschuke Copolymere aus Styrol und Acrylnitril verwendet. Sie sind bekannt und z.T. auch handelsüblich und haben in der Regel eine Viskositätszahl VZ (ermittelt nach DIN 53 726 bei 25°C, 0,5 Gew.-% in Dimethylformamid) von 40 bis 160 ml/g, entsprechend einer mittleren Molmasse von etwa 40000 bis 200000.

Bevorzugt werden die thermoplastischen Polymeren B durch kontinuierliche Substanz- oder Lösungspolymerisation hergestellt, wobei die erhaltene Schmelze, gegebenenfalls nach Entfernung der Lösungsmittel, beispielsweise mit einer Schmelzepumpe kontinuierlich direkt dem Extruder zugeführt wird. Jedoch ist auch eine Herstellung durch Emulsions-, Suspensions- oder Fällungspolymerisation möglich, wobei in einem zusätzlichen Arbeitsschritt das Polymere von der Wasserphase getrennt wird.

Einzelheiten der Herstellungsverfahren sind z.B. im Kunststoffhandbuch, Hrg. R. Vieweg und G. Daumiller, Bd. V "Polystyrol", Carl-Hanser-Verlag, München, 1969, S. 118 ff beschrieben.

Ist die Elastomerkomponente A ein SAN-gepfropftes Polybutadien, so entsteht durch Einarbeiten des SAN eine Formmasse, die als ABS (Acrylnitril/Butadien/Styrol) bekannt ist. Wird als Komponente A ein SAN-gepfropftes Alkylacrylat verwendet, so entstehen sog. ASA-Formmassen (Acrylnitril/Styrol/Acrylat).

In einer anderen Ausführungsform werden Pfropfkautschuke mit bis zu 50 Gew.-% Restwassergehalt auf Basis von Polydienen und/oder Polyalkylacrylaten sowie SAN und/oder PMMA eingesetzt, die aus mehr als zwei Pfropfstufen aufgebaut sind. Beispiele für solche vielstufigen Pfropfpartikel sind Teilchen, die als Kern ein Polydien und/oder Polyalkylacrylat, als erste Hülle ein Polystyrol oder SAN-Polymeres und als zweite Hülle ein anderes SAN-Polymeres mit einem veränderten Gewichtsverhältnis Styrol : Acrylnitril enthalten, oder auch Teilchen aus einem Polystyrol-, Polymethylmethacrylat- oder SAN-Polymerisat-Kern, einer ersten Hülle aus Polydien und/oder Polyalkylacrylat und einer zweiten Hülle aus Polystyrol, Polymethylmethacrylat oder SAN-Polymer. Weitere Beispiele sind Pfropfkautschuke aus einem Polydienkern, einer oder mehreren Polyalkylacrylathüllen und einer oder mehreren Polymer-Hüllen aus Polystyrol, Polymethylmethacrylat oder SAN-Polymer oder analog aufgebaute Pfropfkautschuke mit Acrylatkern und Polydienhüllen.

Ferner sind Copolymerisate mit mehrstufigem Kern-Schale-Aufbau aus vernetztem Alkylacrylat, Styrol, Methylmethacrylat und einer äußeren Schale aus PMMA gebräuchlich.

Solche mehrstufigen Pfropfkautschuke sind z.B. in DE-OS 31 49 046 beschrieben. Pfropfkautschuke auf Basis von n-Butylacrylat/Styrol/Methylmethacrylat mit einer Hülle aus PMMA werden z.B. in EP-A 512 333 beschrieben, wobei auch jeder anderen dem Stand der Technik entsprechende Aufbau solcher Pfropfkautschuke möglich ist.

Derartige Kautschuke werden als schlagzäh machende Komponente für Polyvinylchlorid und bevorzugt für schlagzähes PMMA eingesetzt.

Als thermoplastische Polymere B werden bevorzugt wiederum die genannten SAN-Copolymere und/oder PMMA verwendet.

Ist die Elastomerkomponente A ein mehrschalig aufgebautes Kern/ Schale-Polymer auf Basis n-Butylacrylat/Methylmethacrylat, und das Polymere B PMMA, so erhält man demnach schlagzähes PMMA.

Der Durchmesser der partikelförmigen Pfropfkautschuke beträgt 0,05 bis 20 µm. Handelt es sich um die allgemein bekannten Pfropfkautschuke kleinen Durchmessers, so beträgt er bevorzugt 0,08 bis 1,5 und besonders bevorzugt 0,1 bis 0,8 µm.

Bei den zweckmäßigerweise mittels Suspensionspolymerisation hergestellten großteiligen Pfropfkautschuken ist der Durchmesser bevorzugt 1,8 bis 18 und insbesondere 2 bis 15 µm. Derartige Pfropfkautschuke großen Durchmessers lehrt beispielsweise die DE-OS 44 43 886.

Bevorzugte Komponente B sind auch in dieser Ausführungsform die genannten SAN-Copolymere und/oder PMMA.

Neben der Elastomerkomponente A und dem thermoplastischen Polymeren B können die nach dem erfindungsgemäßen Verfahren hergestellten Formmassen noch weitere Komponenten, insbesondere Zusatzstoffe wie Gleit- und Entformungsmittel, Pigmente, Farbstoffe, Flammschutzmittel, Antioxidantien, Stabilisatoren gegen Lichteinwirkung, faser- und pulverförmige Füll- und Verstärkungsmittel und Antistatika in den für diese Mittel üblichen Mengen enthalten.
Bevorzugt werden die weiteren Komponenten zunächst mit der Elastomerkomponente A und/oder dem thermoplastischen Polymeren B vermischt. Das Vermischen erfolgt auf dem Fachmann bekannten Mischaggregaten.

Die mit dem Verfahren hergestellten thermoplastischen Formmassen können mit den allgemein üblichen Verfahren zu Formkörpern verarbeitet werden. Beispielhaft seien Extrusion (für Rohre, Profile, Fasern, Folien und Platten), Spritzgießen (für Formteile aller Art) sowie Kalandrieren und Walzen (für Platten und Folien) genannt.

Ein wesentlicher Vorteil des erfindungsgemäßen Verfahrens ist, daß ein erheblicher Teil des Restwassers, welches in der teilentwässerten Elastomerkomponente A enthalten ist, bereits in den Abquetschzonen mechanisch entfernt wird, weshalb in den nachfolgenden Extruderabschnitten weniger thermische Energie zur Verdampfung des verbliebenen Wassers angewendet werden muß. Es resultiert eine deutliche Energieeinsparung.

Ein weiterer Vorteil des erfindungsgemäßen Verfahrens liegt darin, daß der Extruder bei niedrigen Temperaturen betrieben werden kann als beispielsweise gemäß dem in der EP-A 534 235 beschriebenen Verfahren, so daß die Elastomerkomponente A und das aus den Bestandteilen A und B - und gegebenenfalls den weiteren Komponenten - bestehende Polymere schonender verarbeitet wird.

Durch das Einarbeiten einer teilentwässerten Elastomerkomponente A in die Schmelze eines thermoplastischen Polymeren B lassen sich, Verträglichkeit oder zumindest Teilverträglichkeit der Elastomerkomponente mit dem thermoplastischen Polymeren und ausreichende thermische Beständigkeit vorausgesetzt, kautschukmodifizierte thermoplastische Formmassen verschiedenster Art herstellen.

Gegenüber den aus dem Stand der Technik bekannten Verfahren hat das erfindungsgemäße Verfahren weiterhin den Vorteil, daß keine verstopfungsanfälligen Seihergehäuse verwendet werden.

Die erfindungsgemäße Anordnung des Extruders kann kostensparend unter Hilfenahme von marktüblichen Extruderbauteilen nach dem Baukastenprinzip aufgebaut werden. Solche Bauteile sind in Form unterschiedlich ausgestalteter Schnecken- und zugehörigen Gehäuseabschnitten, sog. "Schüssen", verfügbar und ermöglichen eine genaue Anpassung des Extruders an das spezielle Konfektionierungsproblem.

### Beispiele

### a) Extruder

Es wird ein Zweischneckenextruder des Typs ZSK 53 von Fa. Werner und Pfleiderer, Stuttgart, eingesetzt, der aus 13 Schüssen aufgebaut ist. Ihre Anordnung ist stromab wie folgt (in Klammern ist die in der Beschreibung verwendete Bezeichnung der Extruderabschnitte angegeben):
- Schuß 0:: Länge 3 Dᵥ, unbeheizt, mit obenliegender Entlüftungsöffnung (Entlüftungsabschnitt 1).
- Schuß 1:: Länge 3 Dᵥ, unbeheizt, mit oberliegender Dosieröffnung, die mit einer Dosiereinrichtung ESB 45 von Fa. Werner und Pfleiderer versehen ist (Dosierabschnitt 2 für Elastomerkomponente A).
- Schuß 2:: Länge 3 Dᵥ, unbeheizt, mit obenliegender Entwässerungsöffnung, die mit einer Rückhalteschnecke versehen ist (erster Abquetschabschnitt 3, vorderer Teil).
- Schuß 3:: Länge 3 Dᵥ, unbeheizt, ohne Öffnungen, enthält Stauelemente (erster Abquetschabschnitt 3, hinterer Teil).
- Schuß 4:: Länge 3 Dᵥ, unbeheizt, ohne Öffnungen, mit fördernder Schnecke (zweiter Abquetschabschnitt 3', vorderer Teil).
- Schuß 5:: Länge 3 Dᵥ, unbeheizt, mit obenliegender Entwässerungsöffnung, die mit einer Rückhalteschnecke versehen ist (zweiter Abquetschabschnitt 3', mittlerer Teil).
- Schuß 6:: Länge 3 Dᵥ, unbeheizt, ohne Öffnungen, enthält Stauelemente sowie einen Schneckenabschnitt mit Knetblöcken (zweiter Abquetschabschnitt 3', hinterer Teil).
- Schuß 7:: Länge 3 Dᵥ, beheizt auf 240°C, ohne Öffnungen, mit fördernder Schnecke
(Abschnitt 4, in dem die Schmelze des thermoplastischen Polymeren B zugeführt wird, vorderer Teil).
- Schuß 8:: Länge 3 Dᵥ, beheizt auf 240°C, mit seitlicher Öffnung, durch die mittels einer Rohrleitung via Schmelzepumpe die Polymerschmelze eingebracht wird (Abschnitt 4, in dem die Schmelze des thermoplastischen Polymeren B zugeführt wird, hinterer Teil) und einen Schneckenabschnitt, der Knetblöcke enthält (erster Plastifizierungsabschnitt 5).
- Schuß 9:: Länge 3 Dᵥ, beheizt auf 240°C, ohne Öffnungen, mit einem Schneckenabschnitt, der Knetblöcke enthält (zweiter Plastifizierungsabschnitt 5').
- Schuß 10:: Länge 3 D_{H}, beheizt auf 240°C, mit obenliegender Entgasungsöffnung und Förderschnecke, wird unter Normaldruck betrieben
(erster Entgasungsabschnitt 6).
- Schuß 11:: Länge 3 D_{H}, beheizt auf 240°C, mit obenliegender Entgasungsöffnung und Förderschnecke, wird unter Normaldruck betrieben
(zweiter Entgasungsabschnitt 6').
- Schuß 12:: Länge 3 D_{H}, beheizt auf 240°C, ohne Öffnungen und mit Förderschnecke
(Austragzone 7, vorderer Teil).
- Abschluß:: Düsenleiste mit zylindrischen Bohrungen
(Austragszone 7, hinterer Teil).

Im vorderen Bereich der Schnecke - Schüsse 0 bis 9 - beträgt der Schneckendurchmesser Dᵥ = 53 mm und die Schnecke ist dreigängig ausgeführt. Im hinteren Bereich der Schnecke - Schüsse 10 bis 12 - ist der Schneckendurchmesser D_{H} = 57 mm und die Schnecke ist zweigängig. "Schnecke" bezeichnet jeweils die Doppelschnecke, also beide Schnecken.

### b) verwendete Polymerkomponenten

Als Elastomerkomponente A wurden die folgenden Pfropfkautschuke eingesetzt:
A-1: Pfropfkautschuk Typ Polybutadien (Kern)/Styrol-Acrylnitril (Schale).
   Butadien wurde in Emulsion polymerisiert, der erhaltene Latex agglomeriert, wobei ein Latex mit einer mittleren Teilchengröße d₅₀ von 238 nm entstand, und anschließend mit einem Gemisch von Styrol und Acrylnitril pfropfpolymerisiert. Näheres ist der DE-AS 24 27 960, Sp. 6, Z. 17 bis Sp. 7, Z. 27, zu entnehmen, wobei das ausgefällte Pfropfpolymerisat jedoch abgesaugt und mittels eines Stromtrockners auf eine Restfeuchte von 28 Gew.-% entwässert wurde. A-2: Propfkautschuk Typ Polybutylacrylat (Kern)/Styrol (erste Stufe)/Styrol-Acrylnitril (zweite Stufe)
   n-Butylacrylat wurde mit Dihydrodicyclopentadienylacrylat als Vernetzer in Emulsion in zwei Schritten zu einem Latex mit einem mittleren Teilchendurchmesser d₅₀ von 410 nm polymerisiert. Auf diesen Latex wurde eine erste Stufe aus Polystyrol und eine zweite Stufe aus Styrol-Acrylnitril-Copolymer pfropfpolymerisiert. Bezüglich der Einzelheiten sei auf die DE-OS 31 49 358, S. 15, Z. 12 bis S. 16, Z. 24, verwiesen, wobei (anstelle des Trocknens im Luftstrom) abzentrifugiert wurde. Die Restfeuchte des eingesetzten Kautschuks betrug 39 Gew.-%.

Als thermoplastisches Polymeres B wurde ein Copolymerisat aus 65 Gew.-% Styrol und 35 Gew.-% Acrylnitril nach dem Verfahren der kontinuierlichen Lösungspolymerisation hergestellt, wie es im Kunststoff-Handbuch, Hrg. R. Vieweg und G. Daumiller, Bd. V "Polystyrol", Carl-Hanser-Vertrag München 1969, Seite 122 bis 124, beschrieben ist. Die Viskositätszahl VZ (ermittelt nach DIN 53 726 bei 25°C, 0,5 Gew.-% in Dimethylformamid) betrug 80 ml/g.

Das SAN-Copolymere wurde dem Extruder als Schmelze zugeführt.

Aus den Komponenten A-1 und B entstehen Formmassen, die allgemein als ABS (Acrylnitril/Butadien/Styrol) bekannt sind. Die aus den Komponenten A-2 und B erhaltenen Produkte sind als ASA-Formmassen (Arcylnitril/Styrol/Acrylester) geläufig.

### c) Messungen

Einer der Pfropfkautschuke A und das Polymere B wurden dem Extruder zugeführt. Gemessen wurden der Wasseraustrag und der Kautschukaustrag in der ersten und zweiten Abquetschzone sowie die Strangfeuchte des austretenden Endproduktes. Diese Messungen wurden gravimetrisch vorgenommen.

Weiterhin wurde die Temperatur des in den Abquetschzonen austretenden Wassers auf übliche Weise gemessen. Die als Dampf ausgetretene Wassermenge wurde durch Differenzbildung des anfänglichen Restwassergehaltes und der Summe des ausgetretenen flüssigen Wassers berechnet.

Aus den Austrägen an Wasser, Dampf und Kautschuk in kg/h wurden Prozentanteile berechnet. Die angegebenen %-Werte sind Gew.-% und beziehen sich für Wasser und Dampf auf den Wassergehalt des dem Extruder zugeführten Kautschuks (mit ∗ markierte Zeile), der gleich 100 gesetzt wurde, und für Kautschuk auf den Durchsatz des feuchten Kautschuks (mit ∗∗ markierte Zeile), der gleich 100 gesetzt wurde. Die Strangfeuchte ist auf das erhaltene Endprodukt bezogen.

**Tabelle**

| Beispiel | 1 | 3 |
|---|---|---|
| Elastomerkomponente | A-1 | A-2 |
| thermoplastisches Polymeres | B | B |
| Durchsatz Kautschuk [kg/h]** | 50 | 85 |
| Zufuhr Schmelze thermopl. Polymer [kg/h] | 84 | 84 |
| Wassergehalt Kautschuk [Gew.-%] * | 28 | 39 |
| Extruder-Drehzahl [min⁻¹] | 250 | 250 |

| 1. Abquetschabschnitt | | |
|---|---|---|
| Austrag Wasser [kg/h] ¹⁾ | 7,0=50 % | 24,4=73 % |
| Austrag Kautschuk [kg/h] ²⁾ | 1,6=3 % | 4,2=8 % |
| Temperatur Wasser [°C] | 26 | 34 |

| 2. Abquetschabschnitt | | |
|---|---|---|
| Austrag Wasser [kg/h] ¹⁾ | 2,4=17 % | 0,7=2 % |
| Austrag Kautschuk [kg/h] ²⁾ | 0,2=<1 % | 0,03=<1 % |
| Temperatur Wasser [°C] | 81 | 88 |
| Entgasungsabschnitte | | |
| Dampfaustrag [kg/h] ¹⁾ | 4,6=33 % | 7,8=23 % |
| Strangfeuchte [Gew.-%] | 0,2 | 0,5 |

| | | |
|---|---|---|
| ¹⁾ %-Werte bezogen auf Zeile * = 100 | | |
| ²⁾ %-Werte bezogen auf Zeile ** = 100 | | |

Die Beispiele zeigen, daß 50 bis 73 Gew.-% des anfänglich im teilentwässerten Kautschuk enthaltenen Restwassers bereits im ersten Abquetschabschnitt als flüssiges Wasser entfernt werden.

Der Kautschukaustrag ist mit 3 bis 8 Gew.-% der Menge feuchten Kautschuks im ersten und weniger als 1 Gew.-% im zweiten Abquetschabschnitt gering.

## Patentansprüche

1. Verfahren zur Herstellung von schlagzäh modifizierten Thermoplasten durch mechanische Entwässerung einer wasserfeuchten, bis zu 50 Gew.-% Restwasser enthaltenden Elastomerkomponente A und Vermischen der so erhaltenen entwässerten Elastomerkomponente A' mit einem thermoplastischen Polymeren B in einer Schneckenmaschine, dadurch gekennzeichnet, daß man die Elastomerkomponente A einem Zweischneckenextruder mit gleichsinnig rotierenden Schnecken zuführt, der in Förderrichtung im wesentlichen aus
- einem unbeheizten Dosierabschnitt, in den mittels einer Dosiereinrichtung die Elastomerkomponente A dem Extruder zugeführt wird,
- mindestens einem der Entwässerung dienenden unbeheizten Abquetschabschnitt, der mindestens ein Stauelement, sowie jeweils mindestens eine zugehörige Entwässerungsöffnung, enthält, wobei als Entwässerungsöffnungen keine Seihergehäuse verwendet werden, wobei die Entwässerungsöffnungen mit jeweils einer Rückhalteschnecke versehen sind,
- mindestens einem Abschnitt, in dem das thermoplastische Polymere B als Schmelze in den Extruder eingeführt wird,
- mindestens einem mit Durchmischungs-, Knet- und/oder anderen Plastifizierungselementen versehenen Abschnitt,
- mindestens einem mit mindestens einer Entgasungsöffnung versehenen Entgasungsabschnitt, in dem das restliche Wasser als Dampf entfernt wird, und
- einer Austragszone
aufgebaut ist, daß das aus den Entwässerungsöffnungen austretende Wasser teilweise oder vollständig in flüssiger Phase vorliegt, und daß beide Extruderschnecken aus jeweils zwei Abschnitten bestehen, wobei der vordere Abschnitt einen kleineren Durchmesser aufweist und dreigängig ist, und der hintere Abschnitt einen größeren Durchmesser aufweist und zweigängig ist, wobei die Änderung der Schneckengeometrien zwischen dem Anfang des ersten Plastifizierungsabschnitts, welcher hinter der Zufuhröffnung des thermoplastischen Polymeren B liegt, und dem Anfang des ersten Entgasungsabschnitts, erfolgt.

2. Verfahren nach Anspruch 1, dadurch gekennzeichnet, daß die Austragszone durch einen Düsenkopf abgeschlossen ist.

3. Verfahren nach Anspruch 1 bis 2, dadurch gekennzeichnet, daß der Extruder in der Austragszone beheizt wird.

4. Verfahren nach Anspruch 1 bis 3, dadurch gekennzeichnet, daß der Extruder zwischen dem letzten Abquetschabschnitt und dem Abschnitt, in dem die Schmelze des thermoplastischen Polymeren B zugeführt wird, mindestens einem mit Durchmischungs-, Knet- und/oder anderen Plastifizierungselementen versehenen Abschnitt aufweist.

5. Verfahren nach Anspruch 1 bis 4, dadurch gekennzeichnet, daß der Extruder zwischen dem letzten Abquetschabschnitt und dem ersten Entgasungsabschnitt mindestens eine Zufuhröffnung für die Schmelze des thermoplastischen Polymeren B, sowie mindestens einen dieser Zufuhröffnung nachfolgenden und gegebenenfalls mindestens einen dieser Zufuhröffnung vorangehenden Durchmischungsabschnitt, aufweist.

6. Verfahren nach Anspruch 1 bis 5, dadurch gekennzeichnet, daß als Elastomerkomponente A mindestens ein Pfropfkautschuk mit einem Restwassergehalt von bis zu 50 Gew.-% eingesetzt wird.

7. Verfahren nach Anspruch 1 bis 6, dadurch gekennzeichnet, daß als Elastomerkomponente A ein zwei- oder mehrstufig aufgebauter Pfropfkautschuk, enthaltend eine Grundstufe aus einem oder mehreren der Monomeren Butadien, Styrol, Alkylstyrol, Alkylacrylat, Alkylmethacrylat und geringen Mengen anderer, auch vernetzender Monomerer und eine Pfropfstufe aus Styrol, Alkylstyrol, Acrylnitril, Methylmethacrylat und ggf. geringen Mengen anderer, auch vernetzender Monomerer oder Mischungen dieser Monomeren, verwendet wird, und als thermoplastisches Polymeres B ein Styrol-Acrylnitril-Copolymeres, Polystyrol, Polymethylmethacrylat, Polyvinylchlorid oder Mischungen dieser Polymeren, eingesetzt wird.

8. Verfahren nach Anspruch 1 bis 7, dadurch gekennzeichnet, daß als Elastomerkomponente A ein Pfropfkautschuk auf Basis von Polybutadien und/oder Polyalkylacrylat als Grundstufe und einem Copolymeren aus Styrol und Acrylnitril als Pfropfstufe, und als thermoplastisches Polymeres B ein Styrol-Acrylnitril-Copolymeres, eingesetzt wird.

9. Verfahren nach Anspruch 1 bis 8, dadurch gekennzeichnet, daß als Elastomerkomponente A ein zwei- oder mehrstufig aufgebauter Pfropfkautschuk eingesetzt wird, der im wesentlichen aus Polyalkylacrylat und einem Copolymeren aus Styrol und Acrylnitril besteht, und als thermoplastisches Polymeres B ein Styrol-Acrylnitril-Copolymeres, eingesetzt wird.

10. Verfahren nach Anspruch 1 bis 9, dadurch gekennzeichnet, daß der Pfropfkautschuk einen Durchmesser von 0,05 bis 20 µm hat.

## Claims

1. A process for the preparation of toughened thermoplastics by mechanically dewatering a water-moist elastomer component A containing up to 50% by weight of residual water and mixing the resulting dewatered elastomer component A' with a thermoplastic polymer B in an extruder, wherein the elastomer component A is fed to a twin-screw extruder which has corotating screws and, in the conveying direction, this actually comprises
- an unheated metering section in which the elastomer component A is fed to the extruder by a metering means,
- at least one unheated squeeze section which serves for dewatering and contains at least one retarding element and in each case at least one associated dewatering orifice, the dewatering orifices used not being filter barrels, the dewatering orifices each being provided with a retaining screw,
- at least one section in which the thermoplastic polymer B is introduced as a melt into the extruder,
- at least one section provided with mixing, kneading or other plasticating elements,
- at least one devolatilization section which is provided with at least one devolatilization orifice and in which the residual water is removed as steam and
- a discharge zone,
some or all of the water emerging from the dewatering orifices is in the liquid phase, and the two extruder screws each consist of two sections, the front section having a smaller diameter and being triple-flight and the rear section having a larger diameter and being double-flight, and the change in the screw geometries taking place between the beginning of the first plastication section, which is located after the feed orifice of the thermoplastic polymer B, and the beginning of the first devolatilization section.

2. A process as claimed in claim 1, wherein the discharge zone is terminated by a die head.

3. A process as claimed in claims 1 and 2, wherein the extruder is heated in the discharge zone.

4. A process as claimed in any of claims 1 to 3, wherein the extruder has, between the last squeeze section and the section in which the melt of the thermoplastic polymer B is fed in, at least one section provided with mixing, kneading or other plasticating elements.

5. A process as claimed in any of claims 1 to 4, wherein the extruder has, between the last squeeze section and the first devolatilization section, at least one feed orifice for the melt of the thermoplastic polymer B and at least one mixing section downstream of this feed orifice and, if required, at least one mixing section upstream of this feed orifice.

6. A process as claimed in any of claims 1 to 5, wherein at least one graft rubber having a residual water content of up to 50% by weight is used as elastomer component A.

7. A process as claimed in any one of claims 1 to 6, wherein a graft rubber which is composed of two or more stages and contains a base stage comprising one or more of the monomers butadiene, styrene, alkyl styrene, alkyl acrylate, alkyl methacrylate and small amounts of other monomers, including crosslinking monomers, and a graft stage comprising styrene, alkyl styrene, acrylonitrile, methyl methacrylate and, if required, small amounts of other monomers, including crosslinking monomers, or a mixture of these monomers, is used as elastomer component A and a styrene/acrylonitrile copolymer, polystyrene, polymethyl methacrylate, polyvinyl chloride or a mixture of these polymers is used as thermoplastic polymer B.

8. A process as claimed in any of claims 1 to 7, wherein a graft rubber based on polybutadiene or polyalkyl acrylate as the base stage and a copolymer of styrene and acrylonitrile as the graft stage is used as elastomer component A, and a styrene/acrylonitrile copolymer is used as thermoplastic polymer B.

9. A process as claimed in any of claims 1 to 8, wherein a graft rubber composed of two or more stages and essentially consisting of polyalkyl acrylate and a copolymer of styrene and acrylonitrile is used as elastomer component A, and a styrene/acrylonitrile copolymer is used as thermoplastic polymer B.

10. A process as claimed in any of claims 1 to 9, wherein the graft rubber has a diameter from 0.05 to 20 µm.

## Revendications

1. Procédé pour la fabrication de thermoplastiques modifiés résistant aux chocs, par essorage mécanique d'un composant élastomérique A contenant jusqu'à 50% en poids d'eau résiduelle et mélange, dans une machine à vis, du composant élastomérique A' essoré ainsi obtenu avec un polymère thermoplastique B, caractérisé en ce que l'on amène le composant élastomérique A dans une extrudeuse à double vis dont les vis tournent dans le même sens, et qui, dans la direction du transport, est essentiellement constituée de:
- une partie de dosage, non chauffée, par laquelle le composant élastomérique A est amené dans l'extrudeuse au moyen d'un dispositif de dosage,
- au moins une partie d'essorage, non chauffée, servant à l'essorage, qui contient au moins un élément d'accumulation associé chaque fois à au moins une ouverture d'évacuation d'eau, et l'on n'utilise pas de boîtiers de filtration comme ouvertures d'évacuation d'eau, les ouvertures d'évacuation d'eau étant chacune dotées d'une vis de retenue,
- au moins une partie par laquelle le polymère thermoplastique B est amené dans l'extrudeuse à l'état fondu,
- au moins une partie dotée d'éléments de mélange intime, d'éléments de pétrissage et/ou d'autres éléments de plastification,
- au moins une partie de dégazage dotée d'au moins une ouverture de dégazage, par laquelle l'eau résiduelle est évacuée sous forme de vapeur, et
- une zone d'extraction,
en ce que l'eau sortant par les ouvertures d'évacuation d'eau se présente en partie ou complètement en phase liquide, et en ce que les deux vis de l'extrudeuse sont constituées de deux parties, la partie avant présentant un plus petit diamètre et étant à triple pas, et la partie arrière présentant un plus grand diamètre et étant à double pas, la modification de la géométrie des vis s'effectuant entre le début de la première partie de plastification située en aval de l'ouverture d'amenée du polymère thermoplastique B, et le début de la première partie de dégazage.

2. Procédé selon la revendication 1, caractérisé en ce que la zone de sortie est fermée par une tête de filière.

3. Procédé selon les revendications 1 à 2, caractérisé en ce que l'extrudeuse est chauffée dans la zone de sortie.

4. Procédé selon les revendications 1 à 3, caractérisé en ce qu'entre la dernière partie d'essorage et la partie dans laquelle le polymère thermoplastique B est amené à l'état fondu, l'extrudeuse présente au moins une partie dotée d'éléments de mélange intime, d'éléments de pétrissage et/ou d'autres éléments de plastification.

5. Procédé selon les revendications 1 à 4, caractérisé en ce qu'entre la dernière partie d'essorage et la première partie de dégazage, l'extrudeuse présente au moins une ouverture d'amenée du polymère thermoplastique B à l'état fondu, ainsi qu'au moins une partie de mélange intime qui suit cette ouverture d'amenée et éventuellement au moins une partie de mélange intime qui précède cette ouverture d'amenée.

6. Procédé selon les revendications 1 à 5, caractérisé en ce que l'on utilise comme composant élastomérique A au moins un caoutchouc greffé dont la teneur résiduelle en eau peut aller jusqu'à 50% en poids.

7. Procédé selon les revendications 1 à 6, caractérisé en ce que comme composant élastomérique A, on utilise un caoutchouc greffé réalisé en deux ou en plusieurs étapes, comprenant une étape de base constituée d'un ou plusieurs des monomères butadiène, styrène, alkylstyrène, acrylate d'alkyle, méthacrylate d'alkyle et de petites quantités d'autres monomères également réticulables, et d'une étape de greffage constituée de styrène, d'alkylstyrène, d'acrylonitrile, de méthacrylate de méthyle et éventuellement de petites quantités d'autres monomères ou mélanges de ces monomères, également réticulables, et en ce que comme polymère thermoplastique B, on utilise un copolymère de styrène et d'acrylonitrile, du polystyrène, du poly(méthacrylate de méthyle), du poly(chlorure de vinyle) ou des mélanges de ces polymères.

8. Procédé selon les revendications 1 à 7, caractérisé en ce que comme composant élastomérique A, on utilise un caoutchouc greffé à base de polybutadiène et/ou de poly(acrylate d'alkyle) comme étape de base, et d'un copolymère de styrène et d'acrylonitrile comme étape de greffage, et comme polymère thermoplastique B, on utilise un copolymère de styrène et d'acrylonitrile.

9. Procédé selon l'une des revendications 1 à 8, caractérisé en ce que comme composant élastomérique A, on utilise un caoutchouc greffé réalisé en deux ou plusieurs étapes, qui est essentiellement constitué de poly(acrylate d'alkyle) et d'un copolymère de styrène et d'acrylonitrile, et comme polymère thermoplastique B, on utilise un copolymère de styrène et d'acrylonitrile.

10. Procédé selon les revendications 1 à 9, caractérisé en ce que le caoutchouc greffé présente un diamètre de 0,05 à 20 µm.
